# EUROPÄISCHE PATENTSCHRIFT

(11) **EP 1 922 520 B1**
(45) Veröffentlichungstag und Bekanntmachung des Hinweises auf die Patenterteilung: **29.10.2008**
(21) Anmeldenummer: 06762691.1
(22) Anmeldetag: 19.07.2006
(51) Int. Cl.: F28F 21/06, F01N 5/02

(54) **ABGASWÄRMEÜBERTRAGER**
EXHAUST GAS HEAT EXCHANGER
ECHANGEUR DE CHALEUR DE GAZ D'ECHAPPEMENT

(30) Priorität: 27.08.2005 DE 102005040612
(43) Veröffentlichungstag der Anmeldung: 21.05.2008
(73) Patentinhaber: Behr GmbH & Co. KG, 70469 Stuttgart (DE)
(72) Erfinder: KÄMMLER, Georg, 70439 Stuttgart (DE); ROSIN, Jürgen, 73630 Remshalden (DE)
(86) Internationale Anmeldenummer: PCT/EP2006/007090
(87) Internationale Veröffentlichungsnummer: WO 2007/025610

(56) Entgegenhaltungen:
- DE-A1- 19 962 863

## Beschreibung

Die Erfindung betrifft einen Abgaswärmeübertrager mit einem Rohrbündel aus Abgasrohren und einem Bypasskanal nach dem Oberbegriff des Patentanspruches 1.

Abgaswärmeübertrager sind - insbesondere bei Kraftfahrzeugen - als Abgasheizungen, so genannte Zuheizer oder als Abgaskühler bekannt. Durch die DE-A 199 62 863 der Anmelderin wurde ein Abgaswärmeübertrager bekannt, der insbesondere als Zuheizer in Kraftfahrzeugen mit verbrauchsoptimierten Motoren verwendbar ist, um das Heizwärmedefizit dieser Motoren zu kompensieren. Das Abgas gibt seine Wärme über ein Rohrbündel von Abgasrohren an das Kühlmittel ab, welches durch den Heizkörper der Fahrzeugheizung strömt. Für den Fall, dass die Abgasheizung nicht mehr benötigt wird, schaltet ein Abgasventil den Abgasstrom um, sodass er einen Bypasskanal durchströmt, der durch eine Trennwand von den Abgasrohren thermisch isoliert ist, was eine Heizwirkung weitestgehend unterbindet. Die Abgasrohre sind also in einem vom Kühlmittel durchströmten Gehäuse angeordnet, während der Bypasskanal in einem abgetrennten, thermisch isolierten Raum untergebracht ist. Vorteilhaft bei dieser Lösung ist die Integration von Abgasrohren und Bypasskanal; nachteilig ist die raumaufwendige thermische Isolierung des Bypasskanals.

Durch die DE-A 102 03 003 wurde ein Abgaswärmeübertrager bekannt, der vorwiegend als Abgaskühler in einem Abgasrückführsystem (AGR-System) einsetzbar ist. Dabei wird Abgas einer Abgasleitung des Verbrennungsmotors entnommen, im Abgaskühler durch das Kühlmittel des Kühlmittelkreislaufes gekühlt und dem Motor zur vollständigen Verbrennung wieder zugeführt. Auch hier ist ein Bypasskanal parallel zu einem Rohrbündel von Abgasrohren geschaltet, wobei der Abgasstrom entweder zum Zwecke der Kühlung durch das Rohrbündel oder im Falle der Nichtkühlung durch den Bypasskanal geleitet wird.

Es ist Aufgabe der vorliegenden Erfindung, bei einem Abgaswärmeübertrager der eingangs genannten Art die thermische Isolierung zu verbessern, zu vereinfachen und möglichst Raum sparend zu gestalten.

Diese Aufgabe wird durch die Merkmale des Patenanspruches 1 gelöst. Erfindungsgemäß ist vorgesehen, dass die Abgasrohre und der Bypasskanal in einem von Kühlmittel durchströmbaren Gehäuse angeordnet sind und dass der Bypasskanal durch eine Kunststoffummantelung thermisch isoliert ist. Wegen der relativ hohen Abgastemperaturen ist der Kunststoff hochtemperaturfest, z. B. ein PTFE oder ein PI. Damit wird der Vorteil erreicht, dass auf zwei getrennte Räume mit einer Trennwand verzichtet und eine wirksame thermische Isolierung auf kleinstem Bauraum realisiert werden kann. Der Bypasskanal kann somit in unmittelbarer Nähe der Abgasrohre angeordnet und damit auch vom Kühlmittel umströmt werden, wobei er aufgrund seiner Isolierung keine oder wenig Wärme an das Kühlmittel abgibt, wenn er von heißen Abgasen durchströmt wird.

In weiterer vorteilhafter Ausgestaltung der Erfindung ist der Bypasskanal als Edelstahlrohr ausgebildet, vorzugsweise mit einem ovalen Querschnitt, d. h. in Anpassung an das Rohrbündel der Abgasrohre. Vorteilhafterweise beträgt die Wandstärke des Edelstahlrohres ca. 0,4 mm, sodass auch eine Verschweißung mit den Rohrböden möglich ist.

In vorteilhafter Weiterbildung der Erfindung ist die Kunststoffummantelung etwas kürzer als die Länge des Edelstahlrohres, sodass bei der Verschweißung des Edelstahlrohres mit den Rohrböden keine thermische Beeinträchtigung der Kunststoffummantelung auftritt. Die Verschweißung erfolgt vorzugsweise mit Laserstrahlen, sodass nur eine lokal sehr eng begrenzte Zone im Bereich der Rohr/Bodenverbindung erwärmt wird.

In einer vorteilhaften Weiterbildung der Erfindung ist die Kunststoffummantelung entweder als einstückiges Rohr oder als Rohr, bestehend aus zwei gefügten Halbschalen, ausgebildet. Dabei ist ein einstückiges, z. B. extrudiertes Kunststoffrohr besonders preiswert. Ein zweiteiliges Rohr dagegen kann auch nach der Verschweißung mit den Rohrböden montiert werden.

In vorteilhafter Weiterbildung der Erfindung sind in der Kunststoffummantelung so genannte Entgasungsbohrungen, vorzugsweise auf der Ober- und auf der Unterseite der Ummantelung angeordnet. Zwischen der Außenfläche des Edelstahlrohres und der Innenfläche der Kunststoffummantelung besteht ein geringer Spalt, der sich mit Kühlmittel füllt, welches infolge der hohen Abgastemperaturen zur Verdampfung gebracht wird. Der so entstehende Kühlmitteldampf hat einerseits eine isolierende Wirkung, soll jedoch andererseits, um Schäden zu vermeiden, durch die Entgasungsbohrungen nach außen entweichen.

Nach einer vorteilhaften Weiterbildung der Erfindung beträgt die Wandstärke der Kunststoffummantelung etwa 1,5 mm. Es ergibt sich somit der Vorteil einer wirksamen thermischen Isolierung auf geringstem Bauraum.

Ein Ausführungsbeispiel der Erfindung ist in der Zeichnung dargestellt und wird im Folgenden näher beschrieben. Es zeigen
- Fig. 1: einen Abgaskühler in perspektivischer Ansicht,
- Fig. 2: den Abgaskühler gemäß Fig. 1 im Schnitt mit Abgasklappe und
- Fig. 3: ein kunststoffummanteltes Bypassrohr für den Abgaskühler.

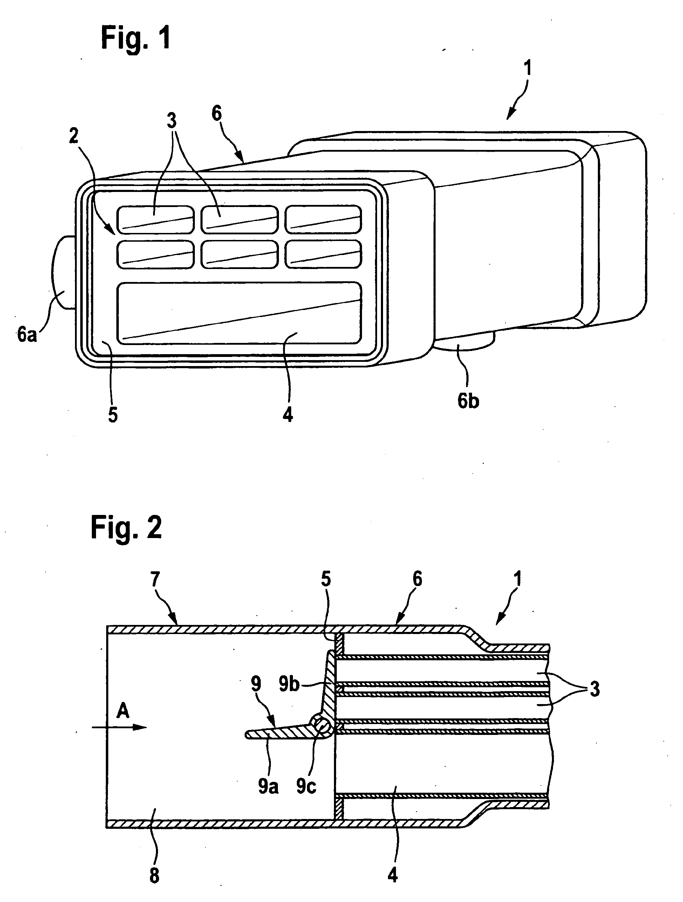

**Fig. 1** zeigt einen bekannten Abgaskühler 1 für ein Abgasrückführsystem für Kraftfahrzeugmotoren. Der Abgaskühler 1 ist genauer in der DE-A 102 03 003 beschrieben, welche in vollem Umfang in den Offenbarungsgehalt dieser Anmeldung einbezogen wird. Im Wesentlichen weist der Abgaskühler 1 ein Rohrbündel 2 von Abgasrohren 3 und ein Bypassrohr 4 auf, welche stimseitig in einem Rohrboden 5 verschweißt sind. Der gegenüberliegende, nicht dargestellte Rohrboden ist analog ausgebildet, d. h. auch dort sind die Abgasrohre 3 und das Bypassrohr 4 verschweißt und damit abgedichtet. Zwischen den Rohrböden ist ein Gehäuse 6 angeordnet, welches von Kühlmittel durchströmt wird; es weist daher Kühlmittelanschlüsse 6a, 6b auf, welche mit einem nicht dargestellten Kühlmittelkreislauf des Verbrennungsmotors des Kraftfahrzeuges verbunden sind. Sämtliche Teile des Abgaskühlers 1 sind vorzugsweise aus Edelstahl hergestellt.

**Fig. 2** zeigt einen Längsschnitt durch den Abgaskühler 1 mit Gehäuse 6, welches über den Rohrboden 5 hinaus zu einem Abgaseintrittsstutzen 7 verlängert ist, welcher einen Abgaseintrittsbereich 8 bildet. Der Eintritt des Abgasstroms ist durch einen Pfeil A dargestellt. Im Abgaseintrittsbereich 8 ist unmittelbar vor dem Rohrboden 5 eine schwenkbare Klappe 9 angeordnet, welche zwei winklig angeordnete Schließflächen 9a, 9b aufweist und um eine Schwenkachse 9c schwenkbar ist. Die Stellung der Abgasklappe 9 wird durch einen nicht dargestellten Stellmotor bewirkt. In der dargestellten Klappenposition sind die Abgasrohre 3 verschlossen, während der Querschnitt des Bypassrohres 4 voll geöffnet ist. In der anderen, nicht dargestellten Klappenposition verschließt der Schenkel 9a den Bypasskanal 4, gleichzeitig werden die Querschnitte der Abgasrohre 3 freigegeben - damit wird eine Kühlung der Abgase durch das Kühlmittel, welches das Gehäuse 6 durchströmt, bewirkt. Beide Darstellungen in Fig. 1 und Fig. 2 entsprechen - wie erwähnt - dem oben genannten Stand der Technik, insbesondere im Hinblick auf die Ausbildung des Bypasskanals 4.

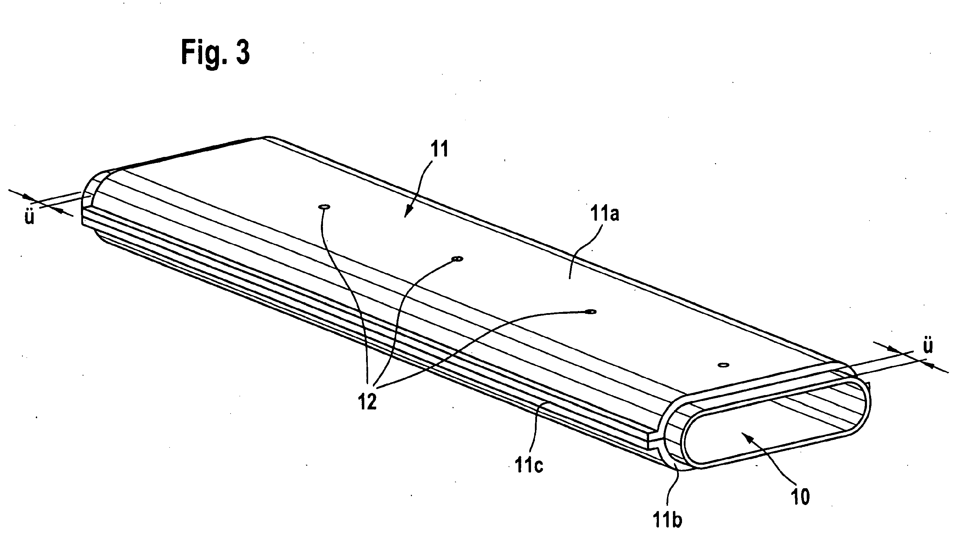

**Fig. 3** zeigt ein erfindungsgemäßes ummanteltes Bypassrohr 10, welches den Bypasskanal 4 nach dem Stand der Technik in Fig. 1 und Fig. 2 ersetzt. Das Bypassrohr 10 ist aus Edelstahl hergestellt und weist etwa eine Materialstärke von 0,4 mm und einen dem bekannten Bypassrohr entsprechenden Querschnitt (in Relation zu den Abgasrohren 3) auf. Der Querschnitt ist - wie aus der Zeichnung ersichtlich - oval, d. h. mit zwei flachen Seiten und zwei gerundeten Schmalseiten. Das Bypassrohr 10 ist von einer Ummantelung 11 aus hochtemperaturfesten Kunststoff, z. B. PTFE oder PI, umgeben, wobei die Ummantelung 11 dicht, d. h. mit einem Klemm- oder Schiebesitz am Außenumfang des Bypassrohres 10 anliegt. Die Ummantelung 11 umschließt das Bypassrohr voll umfänglich, bezüglich der Länge ist die Ummantelung 11 jedoch kürzer als das Bypassrohr 10, welches stirnseitig jeweils einen Überstand ü gegenüber der Ummantelung 11 aufweist. Dieser Überstand ü ist aus fertigungstechnischen Gründen vorgesehen, weil die Stirnseiten des Bypassrohres 10 in die Rohrböden gesteckt und dort verschweißt werden. Bei der Verschweißung soll keine unzulässige Erwärmung der Kunststoffummantelung 11 auftreten. Die Schweißverbindung wird vorzugsweise durch Laserschweißen ausgeführt, sodass nur mit einer örtlich stark eingeschränkten Wärmeentwicklung zu rechnen ist. Somit reicht die Kunststoffummantelung 11 im eingebauten Zustand des Bypassrohres 10 fast unmittelbar bis an die Rohrböden, sodass eine nahezu vollständige Isolierung des Bypassrohres 10 durch die Kunststoffummantelung 11 gegeben ist. Die Materialstärke der Kunststoffummantelung beträgt etwa 1,5 mm. Die Kunststoffummantelung 11 kann entweder einstückig als extrudiertes Kunststoffrohr ausgebildet oder aus zwei Halbschalen 11a, 11b - wie in der Zeichnung dargestellt - hergestellt sein. Im Falle einer zweiteiligen Ausbildung sind die beiden Halbschalen 11a, 11b an ihren Längsseiten, d. h. den Schmalseiten des Bypassrohres 10 durch einen Flansch 11c miteinander verbunden. In der oberen und der unteren Halbschale 11a, 11b der Kunststoffummantelung 11 sind mehrere Entgasungsbohrungen 12 mit einem Durchmesser von etwa 2 mm angeordnet. Die Entgasungsbohrungen 11 schaffen eine Verbindung zwischen einem nicht dargestellten Spalt zwischen Kunststoffummantelung 11 und Abgasrohr 10, der sich im Betrieb des Abgaskühlers mit Kühlmittel füllt. Das Kühlmittel verdampft, wenn heißes Abgas durch das Bypassrohr 10 strömt. Durch die Entgasungsbohrungen 12 kann der Kühlmitteldampf nach außen in das Kühlmittel entweichen, und es wird verhindert, dass sich innerhalb der Kunststoffummantelung 11 ein zu hoher Druck aufbaut. Gleichzeitig wird durch diese Verdampfung des Kühlmittels im Spalt zwischen Kunststoffummantelung 11 und Bypassrohr 10 eine zusätzliche thermische Isolation bewirkt.

Durch die erfindungsgemäße Ausbildung des Bypassrohres 10, d. h. durch die Kunststoffummantelung 11 können sowohl die Abgasrohre 3 als auch das Bypassrohr 10 mit Ummantelung 11 zusammen in dem vom Kühlmittel durchströmten Gehäuse 6 angeordnet werden, ohne dass es einer Trennwand innerhalb des Gehäuses 6 zur Isolierung des Bypasskanals bedarf. Es ergibt sich daraus eine raumsparende Bauweise bei gleichzeitig wirksamer thermischer Isolierung.

## Patentansprüche

1. Abgaswärmeübertrager mit einem Rohrbündel (2) aus Abgasrohren (3) und einem Bypasskanal (4), mit einem von einem flüssigen Kühlmittel durchströmbaren Gehäuse (6), wobei das Rohrbündel (2) und der Bypasskanal (4) jeweils in einen gemeinsamen Abgaseintrittsbereich (8) münden, in welchem ein Abgasventil (9) zur Steuerung des Abgasstromes A durch das Rohrbündel (2) oder den Bypasskanal (4) angeordnet ist, **dadurch gekennzeichnet, dass** der Bypasskanal als Edelstahlrohr (10) mit einer Ummantelung (11) aus hochtemperaturfestem Kunststoff ausgebildet und in dem vom Kühlmittel durchströmbaren Gehäuse (6) angeordnet ist.

2. Abgaswärmeübertrager nach Anspruch 1, **dadurch gekennzeichnet, dass** der Querschnitt des Edelstahlrohres 10 oval ist.

3. Abgaswärmeübertrager nach Anspruch 1 oder 2, **dadurch gekennzeichnet, dass** das das Edelstahlrohr (10) eine Wandstärke von ca. 0,4 mm aufweist.

4. Abgaswärmeübertrager nach Anspruch 1, 2 oder 3, **dadurch gekennzeichnet, dass** im Abgaseintrittsbereich (8) und im Abgasaustrittsbereich Rohrböden (5) angeordnet und dass die Enden des Edelstahlrohres (10) mit den Rohrböden (5) verschweißt sind.

5. Abgaswärmeübertrager nach einem der Ansprüche 1 bis 4, **dadurch gekennzeichnet, dass** die Ummantelung (11) kürzer als das Edelstahlrohr (10) ist, welches stirnseitig jeweils einen Überstand ü aufweist.

6. Abgaswärmeübertrager nach Anspruch 4, **dadurch gekennzeichnet, dass** die Ummantelung (11) vor den Rohrböden (5) endet.

7. Abgaswärmeübertrager nach einem der Ansprüche 1 bis 6, **dadurch gekennzeichnet, dass** die Ummantelung (11) als Rohr ausgebildet und über das Edelstahlrohr (10) schiebbar ist.

8. Abgaswärmeübertrager nach Anspruch 7, **dadurch gekennzeichnet, dass** die Ummantelung (11) als einstückiges Rohr ausgebildet ist.

9. Abgaswärmeübertrager nach Anspruch 7, **dadurch gekennzeichnet, dass** die Ummantelung (11) als ein aus zwei Halbschalen (11a, 11b) zusammengesetztes Rohr ausgebildet ist.

10. Abgaswärmeübertrager nach einem der Ansprüche 1 bis 9, **dadurch gekennzeichnet, dass** die Wandstärke der Ummantelung (11) ca. 1,5 mm beträgt.

11. Abgaswärmeübertrager nach einem der Ansprüche 1 bis 10, **dadurch gekennzeichnet, dass** in der Ummantelung Entgasungsbohrungen (12) angeordnet sind, vorzugsweise mit einem Durchmesser von ca. 2 mm, insbesondere auf beiden flachen Seiten.

## Claims

1. An exhaust gas heat exchanger having a tube bundle (2) of exhaust gas tubes (3) and having a bypass duct (4), having a housing (6) which can be traversed by a liquid coolant, with the tube bundle (2) and the bypass duct (4) in each case opening out into a common exhaust gas inlet region (8) in which is arranged an exhaust gas valve (9) for controlling the exhaust gas flow A through the tube bundle (2) or through the bypass duct (4), **characterized in that** the bypass duct is embodied as a high-grade steel tube (10) with a casing (11) composed of high-temperature-resistant plastic and is arranged in the housing (6) which can be traversed by the coolant.

2. The exhaust gas heat exchanger as claimed in claim 1, **characterized in that** the cross section of the high-grade steel tube (10) is oval.

3. The exhaust gas heat exchanger as claimed in claim 1 or 2, **characterized in that** the high-grade steel tube (10) has a wall thickness of approximately 0.4 mm.

4. The exhaust gas heat exchanger as claimed in claim 1, 2 or 3, **characterized in that** tube plates (5) are arranged in the exhaust gas inlet region (8) and in the exhaust gas outlet region, and **in that** the ends of the high-grade steel tube (10) are welded to the tube plates (5).

5. The exhaust gas heat exchanger as claimed in one of claims 1 to 4, **characterized in that** the casing (11) is shorter than the high-grade steel tube (10), which has a projecting length ü at the end side in each case.

6. The exhaust gas heat exchanger as claimed in claim 4, **characterized in that** the casing (11) ends before the tube plates (5).

7. The exhaust gas heat exchanger as claimed in one of claims 1 to 6, **characterized in that** the casing (11) is embodied as a tube and can be pushed over the high-grade steel tube (10).

8. The exhaust gas heat exchanger as claimed in claim 7, **characterized in that** the casing (11) is embodied as a single-piece tube.

9. The exhaust gas heat exchanger as claimed in claim 7, **characterized in that** the casing (11) is embodied as a tube which is assembled from two half-shells (11a, 11b).

10. The exhaust gas heat exchanger as claimed in one of claims 1 to 9, **characterized in that** the wall thickness of the casing (11) is approximately 1.5 mm.

11. The exhaust gas heat exchanger as claimed in one of claims 1 to 10, **characterized in that** degassing bores (12) are arranged in the casing, preferably with a diameter of approximately 2 mm, in particular on both flat sides.

## Revendications

1. Echangeur de chaleur de gaz d'échappement comprenant un faisceau de tubes (2) se composant de tubes de gaz d'échappement (3) et comprenant un conduit de dérivation (4) comportant un carter (6) pouvant être traversé par un moyen de refroidissement liquide, où le faisceau de tubes (2) et le conduit de dérivation (4) débouchent respectivement dans une zone d'entrée commune de gaz d'échappement (8) dans laquelle est disposée une soupape de gaz d'échappement (9) servant à la régulation du flux de gaz d'échappement A circulant à travers le faisceau de tubes (2) ou à travers le conduit de dérivation (4),
**caractérisé en ce que** le conduit de dérivation est configuré comme un tube (10) en acier spécial comprenant une enveloppe (11) se composant d'une matière plastique à haute résistance thermique et disposé dans le carter (6) pouvant être traversé par le moyen de refroidissement.

2. Echangeur de chaleur de gaz d'échappement selon la revendication 1, **caractérisé en ce que** la section du tube (10) en acier spécial est ovale.

3. Echangeur de chaleur de gaz d'échappement selon la revendication 1 ou 2, **caractérisé en ce que** le tube (10) en acier spécial présente une épaisseur de paroi à peu près égale à 0,4 mm.

4. Echangeur de chaleur de gaz d'échappement selon la revendication 1, 2 ou 3, **caractérisé en ce que** des plateaux à tubes (5) sont disposés dans la zone d'entrée de gaz d'échappement (8) et dans la zone de sortie de gaz d'échappement, et **en ce que** les extrémités du tube (10) en acier spécial et les plateaux à tubes (5) sont soudés ensemble.

5. Echangeur de chaleur de gaz d'échappement selon l'une quelconque des revendications 1 à 4, **caractérisé en ce que** l'enveloppe (11) est plus courte que le tube (10) en acier spécial qui présente à chaque fois, côté frontal, un débordement ü.

6. Echangeur de chaleur de gaz d'échappement selon la revendication 4, **caractérisé en ce que** l'enveloppe (11) se termine avant les plateaux à tubes (5).

7. Echangeur de chaleur de gaz d'échappement selon l'une quelconque des revendications 1 à 6, **caractérisé en ce que** l'enveloppe (11) est configurée comme un tube et peut être poussée par-dessus le tube (10) en acier spécial.

8. Echangeur de chaleur de gaz d'échappement selon la revendication 7, **caractérisé en ce que** l'enveloppe (11) est configurée comme un tube d'un seul tenant.

9. Echangeur de chaleur de gaz d'échappement selon la revendication 7, **caractérisé en ce que** l'enveloppe (11) est configurée comme un tube composé de deux demi-coques (11a, 11b).

10. Echangeur de chaleur de gaz d'échappement selon l'une quelconque des revendications 1 à 9, **caractérisé en ce que** l'épaisseur de paroi de l'enveloppe (11) est à peu près égale à 1,5 mm.

11. Echangeur de chaleur de gaz d'échappement selon l'une quelconque des revendications 1 à 10, **caractérisé en ce que** des perçages de dégazage (12), ayant de préférence un diamètre à peu près égal à 2 mm, sont disposés dans l'enveloppe, en particulier sur les deux côtés plats.
